# EUROPEAN PATENT APPLICATION

(11) **EP 4 641 940 A1**
(43) Date of publication of application: **29.10.2025**
(21) Application number: 23905859.7
(22) Date of filing: 18.12.2023
(51) Int. Cl.: H04B 7/0413

(54) **ELECTRONIC DEVICE AND COMMUNICATION METHOD**

(30) Priority: 21.12.2022 CN 202211649370
(71) Applicant: Sony Group Corporation, Tokyo 108-0075 (JP)
(72) Inventor: CUI, Tao, Beijing 100027 (CN); LI, Haojin, Beijing 100027 (CN); SUN, Chen, Beijing 100027 (CN)
(74) Representative: D Young & Co LLP
(86) International application number: PCT/CN2023/139342
(87) International publication number: WO 2024/131695

(57) **Abstract**

The present disclosure relates to an electronic device and a communication method. An electronic device comprises: a processing circuit configured to: acquire first channel quality measurement information based on a non-AI mode and second channel quality measurement information based on an AI mode; provide, to a first prediction model, the first channel quality measurement information as an input, and obtain, from an output of the first prediction model, first channel quality prediction information predicted for a future time; provide, to a second prediction model, the second channel quality measurement information as an input, and obtain, from an output of the second prediction model, second channel quality prediction information predicted for the future time; and compare the first channel quality prediction information with the second channel quality prediction information to determine whether the non-AI mode or the AI mode is used at the future time.

## Description

### CROSS-REFERENCE TO RELATED APPLICATIONS

The present application claims the priority to the Chinese patent application No. 202211649370.9 filed on December 21, 2022, which is incorporated by reference herein in its entirety.

### TECHNICAL FIELD

The present disclosure relates to the field of communication, and more specifically, to beam management.

### BACKGROUND

In a wireless communication system using multiple-input multiple-output (MIMO) technology, a base station (as an example of a network-side communication device or communication node in the system) and a user equipment (UE) (also referred to as a terminal device, as an example of a user-side communication device or communication node in the system) have a plurality of antennas supporting the MIMO technology. The base station antenna and the UE antenna may form spatial beams with narrow directivity, to provide strong power coverage in a specific direction, thereby combating a large path loss existing in a channel in a high frequency band (e.g., millimeter wave). However, due to the strong directivity and narrow coverage of these spatial beams, it is necessary to select, from a plurality of transmit beams and receive beams of the base station and UE, an appropriate transmit beam and receive beam for transmission of data and/or control signals on uplink and downlink channels.

### SUMMARY

A brief summary of the present disclosure is presented hereinafter so as to provide a basic understanding of some aspects of the present disclosure. However, it should be understood that this summary is not an exhaustive overview of the present disclosure. It is not intended to determine key or critical elements of the present disclosure or to limit the scope of the present disclosure. Its purpose is only to present certain concepts of the present disclosure in a simplified form as a prelude to the more detailed description to be presented later.

There is provided a technique of establishing and maintaining an appropriate beam pair between a transmitter (base station or UE) and a receiver (UE or base station) using beam management. Selection of an appropriate receive beam on the receiver side and selection of an appropriate transmit beam on the transmitter side are combined to maintain a good wireless connection.

A channel measurement-based beam management solution may be employed. Specifically, by performing downlink beam scanning from the base station to the UE, downlink reference signals are transmitted on a plurality of transmit beams of the base station and received using a plurality of receive beams of the UE, and by measuring the downlink reference signals, a strongest transmit beam of the base station and a strongest receive beam of the UE may be selected for transmission of data and/or control signals on a downlink channel. Similarly, by performing uplink beam scanning of the UE to the base station and measuring uplink reference signals, a strongest receive beam of the base station and a strongest transmit beam of the UE may be selected for transmission of data and/or control signals on an uplink channel.

In addition, with the development of artificial intelligence (AI) technology, an AI-based beam management solution has been provided. Specifically, it is possible to establish an AI-based beam management model, to predict a transmit beam and receive beam that will be used for information transmission in the future using a transmit beam and receive beam that were used in information transmission in the past.

AI-based beam management in an AI mode can reduce measurement overhead on the base station/UE side, improve efficiency of beam management, and the like, compared with the channel measurement-based beam management in a non-AI mode. However, the inventors of the present disclosure have found that, in some cases, compared with the beam management in the non-AI mode, the beam management in the AI mode sometimes can not necessarily result in good channel quality. For example, influenced by a radio environment, there is an occlusion just between the UE and the base station, which results in poor signal quality, thereby influencing the channel quality obtained by the beam management in the AI mode.

In view of one or more of the above problems, the present disclosure provides a prediction mechanism for a beam management mode, capable of predicting whether an AI mode or a non-AI mode is used at a future time for beam management.

According to one aspect of the present disclosure, there is provided an electronic device. The electronic device may comprise a processing circuit that may be configured to: acquire first channel quality measurement information based on a non-AI mode and second channel quality measurement information based on an AI mode, wherein, in the non-AI mode, beam measurement is performed to determine a beam for information transmission, the first channel quality measurement information comprising channel quality measurement information for the determined beam; and in the AI mode, a beam for information transmission is predicted using an AI beam management model, the second channel quality measurement information comprising channel quality measurement information for the predicted beam; provide, to a first prediction model, the first channel quality measurement information as an input, and obtain, from an output of the first prediction model, first channel quality prediction information predicted for a future time, the first prediction model being trained using past first channel quality measurement information in the non-AI mode; provide, to a second prediction model, the second channel quality measurement information as an input, and obtain, from an output of the second prediction model, second channel quality prediction information predicted for the future time, the second prediction model being trained using past second channel quality measurement information in the AI mode; and compare the first channel quality prediction information with the second channel quality prediction information, to determine whether the non-AI mode or the AI mode is used at the future time.

According to another aspect of the present disclosure, there is provided a communication method. The method may comprise: acquiring first channel quality measurement information based on a non-AI mode and second channel quality measurement information based on an AI mode, wherein, in the non-AI mode, beam measurement is performed to determine a beam for information transmission, the first channel quality measurement information comprising channel quality measurement information for the determined beam; and in the AI mode, a beam for information transmission is predicted using an AI beam management model, the second channel quality measurement information comprising channel quality measurement information for the predicted beam; providing, to a first prediction model, the first channel quality measurement information as an input, and obtaining, from an output of the first prediction model, first channel quality prediction information predicted for a future time, the first prediction model being trained using past first channel quality measurement information in the non-AI mode; providing, to a second prediction model, the second channel quality measurement information as an input, and obtaining, from an output of the second prediction model, second channel quality prediction information predicted for the future time, the second prediction model being trained using past second channel quality measurement information in the AI mode; and comparing the first channel quality prediction information with the second channel quality prediction information, to determine whether the non-AI mode or the AI mode is used at the future time.

According to another aspect of the present disclosure, there is provided a computer-readable storage medium, comprising executable instructions which, when executed by an information processing device, cause the information processing device to perform the communication method according to the present disclosure.

According to yet another aspect of the present disclosure, there is provided a computer program product, comprising a computer program which, when executed by a processor, causes the processor to perform the communication method according to the present disclosure.

According to one or more embodiments of the present disclosure, whether an AI mode or a non-AI mode is used at a future time for beam management can be predicted, thereby improving efficiency of the beam management and reducing system overhead of the beam management, while guaranteeing channel quality that the beam management can result in.

### BRIEF DESCRIPTION OF THE DRAWINGS

The accompanying drawings, which constitute a part of the specification, illustrate embodiments of the present disclosure, and together with the description, serve to explain the principles of the present disclosure.

The present disclosure may be more clearly understood according to the following detailed description by referring to the accompanying drawings, in which:
Fig. 1 is a schematic diagram illustrating channel measurement-based beam management in a non-AI mode;
Fig. 2 is an exemplary configuration block diagram illustrating an electronic device for predicting a beam management mode according to an embodiment of the present disclosure;
Fig. 3 is an exemplary flow diagram illustrating a communication method for predicting a beam management mode according to an embodiment of the present disclosure;
Fig. 4 is a schematic diagram illustrating a data flow in a communication method for predicting a beam management mode according to an embodiment of the present disclosure;
Fig. 5 is an exemplary signaling process diagram illustrating AI beam management according to an embodiment of the present disclosure;
Fig. 6 is a block diagram illustrating a first example of a schematic configuration of a gNB according to an embodiment of the present disclosure;
Fig. 7 is a block diagram illustrating a second example of a schematic configuration of a gNB according to an embodiment of the present disclosure;
Fig. 8 is a block diagram illustrating an example of a schematic configuration of a smartphone according to an embodiment of the present disclosure; and
Fig. 9 is a block diagram illustrating an example of a schematic configuration of a car navigation device according to an embodiment of the present disclosure.

### DETAILED DESCRIPTION

Various exemplary embodiments of the present disclosure will now be described in detail with reference to the accompanying drawings. It should be noted that: the relative arrangement of parts and steps, numerical expressions and numerical values set forth in these embodiments do not limit the scope of the present disclosure unless specifically stated otherwise.

Meanwhile, it should be understood that sizes of the parts shown in the drawings are not drawn to actual scale for convenience of description.

The following description of at least one exemplary embodiment is merely illustrative in nature, and is in no way intended to limit this disclosure and its applications or uses.

Techniques, methods, and devices known to one of ordinary skill in the related art may not be discussed in detail, but are intended to be part of the description where appropriate.

In all examples shown and discussed herein, any specific value should be construed as exemplary only and not as limiting. Thus, other examples of an exemplary embodiment may have different values.

It should be noted that: similar reference numbers and letters refer to similar items in the following drawings, and thus, once a certain item is defined in one drawing, it need not be discussed further in subsequent drawings.

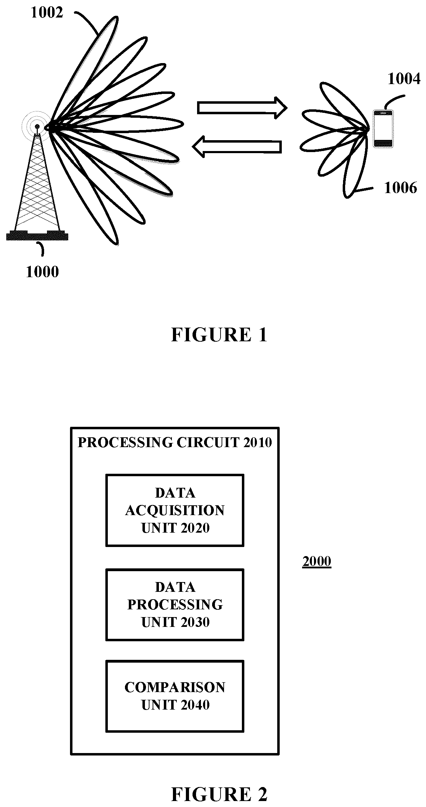

Fig. 1 shows a schematic diagram of channel measurement-based beam management in a non-AI mode.

A rightward arrow in Fig. 1 represents a downlink direction from a base station 1000 to a UE 1004, and a leftward arrow represents an uplink direction from the UE 1004 to the base station 1000. As shown in Fig. 1, the base station 1000 includes n_{t_DL} downlink transmit beams (where n_{t_DL} is a natural number greater than or equal to 1, exemplified as n_{t_DL} =9 in Fig. 1), and the UE 1004 includes n_{r_DL} downlink receive beams (where n_{r_DL} is a natural number greater than or equal to 1, exemplified as n_{r_DL}=5 in Fig. 1).

As shown in Fig. 1, in a downlink beam scanning process, one downlink transmit beam (for example, a beam 1002) in the n_{t_DL} downlink transmit beams of the base station 1000 sends n_{r_DL} downlink reference signals to the UE 1004, and the UE 1004 receives the n_{r_DL} downlink reference signals by the n_{r_DL} downlink receive beams, respectively. The downlink reference signal may be, for example, a synchronization signal block (SSB) or a channel state information reference signal (CSI-RS), or may be another reference signal that can be used for channel quality measurement. The UE 1004 measures the n_{r_DL} downlink reference signals (e.g., measures received signal power (e.g., reference signal received power (RSRP)) of the downlink reference signals and channel quality (e.g., a channel quality indicator (CQI))), thereby determining a strongest downlink receive beam of the UE 1004. Next, n_{t_DL}-1 downlink transmit beams in the n_{t_DL} downlink transmit beams of the base station 1000 other than, for example, the beam 1002, respectively transmit n_{t_DL}-1 downlink reference signals to the UE 1004, and the UE 1004 respectively receives the n_{t_DL}-1 downlink reference signals by using the determined strongest downlink receive beam and measures them, thereby determining a strongest downlink transmit beam of the base station 1000.

In an uplink beam scanning process, which is similar to the downlink beam scanning process, uplink beam scanning is performed by using n_{t_UL} uplink transmit beams of the UE 1004 and n_{r_UL} uplink receive beams of the base station 1000, thereby determining a strongest uplink transmit beam of the UE 1004 and a strongest uplink receive beam of the base station 1000.

After the downlink beam scanning and uplink beam scanning processes have been completed, the following transmission of information (e.g., data and/or control signals) is performed using the determined strongest transmit/receive beam of the base station and the determined strongest transmit/receive beam of the UE.

The channel measurement-based beam management in the non-AI mode (sometimes also referred to as "beam measurement in a non-AI mode" hereinafter) has been described above. With the development of AI technology, AI-based beam management in an AI mode is provided. Specifically, it is possible to establish an AI beam management model, to predict a transmit beam and a receive beam that will be used for information transmission in the future using a transmit beam and a receive beam that were used in information transmission in the past.

As an example, a training phase and prediction phase of the AI beam management model are briefly described below.

In the training phase of the AI beam management model, the AI beam management model is trained using, as training data, a transmit beam and a receive beam (for example, beam IDs) actually used in the information transmission in the past. In some embodiments, the training data may be a piece of continuous time series data, for example, time series data obtained by collecting the beam ID a predetermined number of times (e.g., 500 times, 5 milliseconds each time) every predetermined time interval in a period of continuous time in the past. In the training data, for example, it is possible to take a transmit beam and receive beam at a past time 0~t₀-N (where N is a time step, for example, a sampling period of the training data, and may be arbitrarily set) as inputs of the AI beam management model, and take a transmit beam and receive beam at a past time t₀ as a ground truth, compare outputs of the AI beam management model and the ground truth, and modify parameters of the AI beam management model in a manner of enabling a difference between the output of the AI beam management model and the real value to be reduced, so as to complete the training phase of the AI beam management model.

In the prediction stage of the AI beam management model, by inputting an actual transmit beam and receive beam at a current time t as inputs of the AI beam management model, a transmit beam and receive beam predicted at a future time t+N may be obtained from outputs of the AI beam management model. In addition, the future time at which the AI beam management model is capable of predicting is not limited to the time t+N, and may also be any time in a predetermined period of time from the current time. A granularity of the future time at which the AI beam management model is capable of predicting may be appropriately set and adjusted as needed, besides that a sampling frequency of the training data may be appropriately determined according to the granularity.

It should be understood that the AI beam management model described herein may be any AI-based model, including, for example, but not limited to, a deep learning neural network (e.g., a convolutional neural network CNN, recurrent neural network RNN, long short-term memory network LSTM) model.

Compared with the beam management in the non-AI mode, the beam management in the AI mode can, due to no need of the beam scanning and the channel measurement, reduce measurement overhead of the base station/UE side and improve efficiency of the beam management. However, the inventors of the present disclosure have found that, in some cases, compared with the beam management in the non-AI mode, the beam management in the AI mode sometimes can not necessarily result in good channel quality. For example, influenced by a radio environment, there is an occlusion just between the UE and the base station, which results in poor signal quality, thereby influencing the channel quality obtained by the beam management in the AI mode. Accordingly, the present disclosure provides a prediction mechanism for a beam management mode, capable of predicting whether an AI mode or a non-AI mode is used at a future time for beam management.

A prediction mechanism for a beam management mode according to the present disclosure will be described in detail below with reference to Figs. 2 to 4.

Fig. 2 illustrates an exemplary configuration block diagram of an electronic device 2000 according to an embodiment of the present disclosure. The electronic device 2000 may be used for, for example, predicting a beam management mode according to the present disclosure.

In some embodiments, the electronic device 2000 may comprise a processing circuit 2010. The processing circuit 2010 of the electronic device 2000 provides various functions of the electronic device 2000. In some embodiments, the processing circuit 2010 of the electronic device 2000 may be configured to perform a communication method for the electronic device 2000.

The processing circuit 2010 may refer to various implementations of digital, analog, or mixed-signal (analog-and-digital combination) circuitry that perform functions in a computing system. The processing circuit may include, for example, a circuit such as an integrated circuit (IC) and an application specific integrated circuit (ASIC), a part or circuit of an individual processor core, an entire processor core, an individual processor, a programmable hardware device such as a field programmable gate array (FPGA), and/or a system including a plurality of processors.

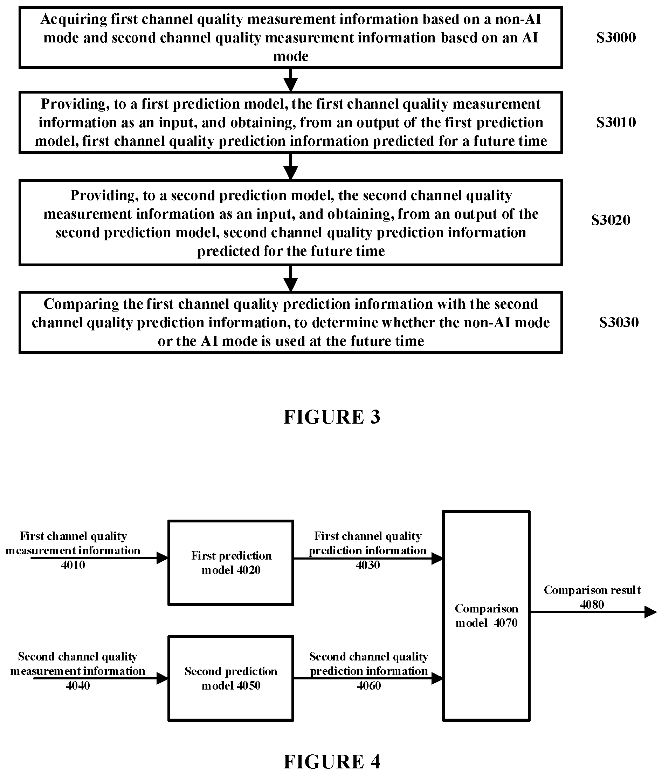

In some embodiments, the processing circuit 2010 may comprise a data acquisition unit 2020, a data processing unit 2030, and a comparison unit 2040, which are configured to perform corresponding steps in a communication method shown in Fig. 3 described later.

In some embodiments, the electronic device 2000 may also include a memory (not shown). The memory of the electronic device 2000 may store information generated by the processing circuit 2010, as well as program and data for the operation of the electronic device 2010. The memory may be a volatile memory and/or a non-volatile memory. For example, the memory may include, but is not limited to, a random access memory (RAM), dynamic random access memory (DRAM), static random access memory (SRAM), read only memory (ROM), and flash memory.

In addition, the electronic device 2000 may be implemented at a chip level, or implemented at a device level by including other external components. In some embodiments, the electronic device 2000 may be, as a whole, implemented as a first communication device, and may also include a plurality of antennas. In addition, the electronic device 2000 may be deployed at a cloud side, a base station side, or a UE side.

It should be understood that, the above units are only logic modules divided according to the specific functions implemented by the units, and are not used for limiting specific implementations. In actual implementations, the above units may be implemented as independent physical entities, or implemented by a single entity (for example, a processor (CPU or DSP, etc.), an integrated circuit, etc.).

Fig. 3 illustrates an exemplary flow diagram of a communication method for predicting a beam management mode according to embodiments of the present disclosure, where the communication method may be implemented, for example, by the electronic device 2000 shown in Fig. 2.

As shown in Fig. 3, in S3000, the data acquisition unit 2020 acquires first channel quality measurement information based on a non-AI mode and second channel quality measurement information based on an AI mode.

The above non-AI mode is, for example, the channel measurement-based non-AI mode described above with reference to Fig. 1, in which, the beam measurement shown in Fig. 1 for example is performed to determine a beam for information transmission. In addition, the first channel quality measurement information may comprise channel quality measurement information of the beam for information transmission, that is determined in the non-AI mode. The channel quality measurement information may include, for example, one or more of a RSRP, a CQI, a bit error rate (BER), a signal to interference plus noise ratio (SINR), and a beam azimuth angle (degree), but is not limited thereto, or include other channel quality measurement information as long as it is information that can reflect channel quality.

The above AI mode is a mode of the AI-based beam management model described above, in which, a beam for information transmission is predicted using the AI beam management model. In addition, the second channel quality measurement information comprises channel quality measurement information of the beam for information transmission, that is predicted by the AI beam management model.

In the case of downlink communication, the UE performs downlink channel quality measurement, and provides the first channel quality measurement information and the second channel quality measurement information to the data acquisition unit 2020. Similarly, in the case of uplink communication, the base station performs uplink channel quality measurement, and provides the first channel quality measurement information and the second channel quality measurement information to the data acquisition unit 2020.

Next, in S3010, the data processing unit 2030 provides, to a first prediction model, the first channel quality measurement information as an input, and obtains, from an output of the first prediction model, first channel quality prediction information predicted for a future time.

In S3020, the data processing unit 2030 provides, to a second prediction model, the second channel quality measurement information as an input, and obtains, from an output of the second prediction model, second channel quality prediction information predicted for the future time.

Fig. 4 illustrates a schematic diagram of a data flow in a communication method for predicting a beam management mode according to an embodiment of the present disclosure. As shown in Fig. 4, the first channel quality measurement information 4010 and the second channel quality measurement information 4040 acquired in the S3000 are provided to the first prediction model 4020 and the second prediction model 4050, respectively, in the S3020.

The first prediction model 4020 is trained using past first channel quality measurement information in the non-AI mode.

In a training phase of the first prediction model 4020, the first prediction model 4020 is trained using the past first channel quality measurement information as training data. The past first channel quality measurement information is obtained by measuring a beam for information transmission in the past in the non-AI mode. In some embodiments, the past first channel quality measurement information may be a piece of continuous time series data, for example, time series data obtained by collecting channel measurement information a predetermined number of times (for example, 500 times, 5 milliseconds each time) every a predetermined time interval in a period of continuous time in the past. In the training data, for example, it is possible to take first channel quality measurement information at a past time 0~t₀-N (where N is a time step, for example, a sampling period, and may be arbitrarily set) as an input of the first prediction model 4020, and take first channel quality measurement information at a past time t₀ as a ground truth, compare an output of the first prediction model 4020 with the ground truth, and modify a parameter of the first prediction model 4020 in a manner of enabling a difference between the output of the first prediction model 4020 and the ground truth to be reduced, so as to complete the training phase of the first prediction model 4020.

In a prediction stage of the first prediction model 4020, by inputting the first channel quality measurement information 4010 at the current time t as an input of the first prediction model 4020, first channel quality prediction information 4030 at a future time (for example, a time t+N) may be obtained from an output of the AI beam management model. The first channel quality prediction information 4030 may also be a piece of time series data (e.g., time series data at the time t+N) whose data type corresponds to the first channel quality measurement information 4010 inputted at the current time. For example, in the case where the first channel quality measurement information 4010 inputted at the current time t is RSRP, the output of the first prediction model 4020 can be RSRP at the future time t+N, as the first channel quality prediction information 4030 at the future time t+N.

The second prediction model 4050 is trained using past second channel quality measurement information in the AI mode.

In a training stage of the second prediction model 4050, the second prediction model 4050 is trained using the past second channel quality measurement information as training data. The past second channel quality measurement information is obtained by measuring a beam for information transmission in the past in the AI mode. In some embodiments, the past second channel quality measurement information may be a piece of continuous time series data, for example, time series data obtained by collecting channel measurement information a predetermined number of times (for example, 500 times, 5 milliseconds each time) every a predetermined time interval in a period of continuous time in the past. In the training data, for example, it is possible to take second channel quality measurement information at a past time 0~t₀-N (where N is a time step, for example, a sampling period of the training data, and may be arbitrarily set) as an input of the second prediction model 4050, and take second channel quality measurement information at a past time t₀ as a ground truth, compare an output of the second prediction model 4050 and the ground truth, and modify a parameter of the second prediction model 4050 in a manner of enabling a difference between the output of the second prediction model 4050 and the ground truth to be reduced, so as to complete the training phase of the second prediction model 4050.

In a prediction stage of the second prediction model 4050, by inputting the second channel quality measurement information 4040 at the current time t as an input of the second prediction model 4050, second channel quality prediction information 4060 at a future time (for example, at a time t+N) may be obtained from an output of the AI beam management model. The second channel quality prediction information 4060 may also be a piece of time series data (e.g., time series data at the time t+N) whose data type corresponds to the actual second channel quality measurement information 4040 inputted at the current time. For example, in the case where the actual second channel quality measurement information 4040 inputted at the current time t is RSRP, the output of the second prediction model 4050 can be RSRP at the future time t+N, as the second channel quality prediction information 4060 at the future time t+N.

It should be appreciated that, similar to the AI beam management model described above, the first prediction model 4010 and the second prediction model 4020 described herein may be any AI-based model, which can include, for example, but is not limited to, a deep learning neural network (e.g., convolutional neural network CNN, recurrent neural network RNN, long short-term memory LSTM) model.

In addition, The LSTM is a time recurrent neural network, and can have better performance in a longer sequence, compared with the common RNN. The LSTM network has an input layer, a hidden layer, a fully connected layer and a regression layer (output layer), wherein the hidden layer functions to enable the network to achieve the effect of "forgetting the unimportant ones and remembering the important ones" in the training process, so that the regression layer (output layer) is capable of predicting with higher accuracy in the testing process. For an optimization function in the training process of the LSTM network, Adam (a first-order optimization algorithm that can replace a traditional stochastic gradient descent, which is capable of iteratively updating a neural network weight based on training data) is employed. Therefore, in the present disclosure, future beam selection is predicted preferably using the LSTM, thereby reducing beam measurement and other overhead. In addition, for the AI beam management model, the LSTM is also preferably used since the model also has dependency on time.

Referring back to Fig. 3, in S3030, the comparison unit 2040 compares the first channel quality prediction information with the second channel quality prediction information, to determine whether the non-AI mode or the AI mode is used at the future time. For example, referring to Fig. 4, the first channel quality prediction information 4030 and the second channel quality prediction information 4060 are inputted to a comparison model 4070 (corresponding to the comparison unit 2040 in Fig. 2), thereby determining a comparison result 4080. For example, in the case where the first channel quality prediction information 4030 and the second channel quality prediction information 4060 include RSRP, magnitudes of the two RSRPs can be compared, thereby determining the comparison result 4080.

In some embodiments, when a difference between the first channel quality prediction information 4030 and the second channel quality prediction information 4060 is below a first predetermined threshold, the comparison model 4070 may determine that the comparison result 4080 is that the AI mode is used at the future time. In addition, when the difference between the first channel quality prediction information 4030 and the second channel quality prediction information 4060 is greater than the first predetermined threshold, the comparison model 4070 may determine that the comparison result 4080 is that the non-AI mode is used at the future time.

The first predetermined threshold may be, for example, an empirical value determined according to an actual network environment, and may be adjusted according to a change in the network environment. In the present disclosure, when the difference between the first channel quality prediction information 4030 and the second channel quality prediction information 4060 is relatively small (below the first predetermined threshold), it can be considered that prediction results in the AI mode and the non-AI mode are close, and thus the AI mode may be used at the future time, to improve efficiency of the beam management and reduce system overhead of the beam management while guaranteeing channel quality. In addition, when the difference between the first channel quality prediction information 4030 and the second channel quality prediction information 4060 is relatively large (greater than the first threshold), it can be considered that a large deviation may occur in the prediction result in the AI mode, and thus the non-AI mode is used at the future time, thereby guaranteeing channel quality.

In some embodiments, when the difference between the first channel quality prediction information 4030 and the second channel quality prediction information 4060 is greater than a second predetermined threshold, the second prediction model 4050 may be retrained. The second predetermined threshold may be, for example, an empirical value determined according to an actual network environment, and may be adjusted according to a change in the network environment. In the present disclosure, when the difference between the first channel quality prediction information 4030 and the second channel quality prediction information 4060 is greater than the second predetermined threshold, it can be considered that a large deviation occurs in the prediction result in the AI mode, which may be because the prediction in the AI mode is a further prediction on the prediction result of the AI beam management model, which is prone to an accumulative error, and thus the second prediction model 4050 needs to be retrained. In some embodiments, the second predetermined threshold and the above first predetermined threshold may be set independently of each other. In other embodiments, the second predetermined threshold may be set to be greater than or equal to the first predetermined threshold.

In some embodiments, in the case of determining that the comparison result 4080 is that the AI mode is used at the future time, the base station may activate the AI mode, so that the AI mode is used at the future time. In addition, in the case of determining that the comparison result 4080 is that the non-AI mode is used at the future time, the base station may deactivate the AI mode, so that the non-AI mode is used at the future time. In addition, in some embodiments, in the case where the AI beam management model based on the AI mode is deployed on the UE side, the base station may activate or deactivate the AI mode by sending, to the UE, control signaling such as a medium access control-control element (MAC CE) or downlink control information (DCI), or carry, in a PDSCH, information for activating or deactivating the AI mode. In some embodiments, in the case where the electronic device 2000 is deployed on the UE side, it is possible to feed back, by the UE, the comparison result 4080 to the base station through uplink control information (UCI) and other control signaling or a physical uplink data channel (PUSCH), thereby activating or deactivating the AI mode by the base station.

In addition, in some embodiments, considering the accumulative error of the second prediction model 4050 described above, the base station may periodically deactivate the AI mode and adjust or retrain the second prediction model 4050, to reduce the accumulative error of the second prediction model 4050 and improve prediction accuracy of the second prediction model 4050.

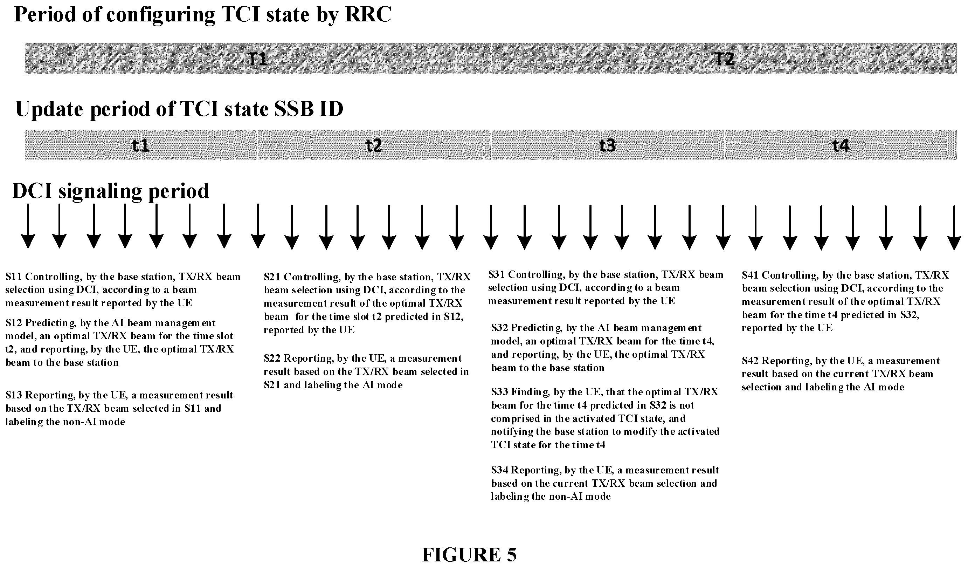

Next, an exemplary signaling process of AI beam management according to an embodiment of the present disclosure will be described with reference to Fig. 5.

In order to describe an exemplary signaling process of AI beam management according to the present disclosure, some concepts related to the signaling process are first introduced below.

In beam management, the base station configures a transmission configuration indicator (TCI) state through radio resource control (RRC) signaling and a MAC CE, and activates different TCI states using DCI to notify the UE of which downlink transmit beam the base station activates for information transmission of the UE, and thus the UE can select an optimal downlink receive beam corresponding to the downlink transmit beam accordingly.

The TCI state is defined as follows:
for reception of one reference signal, the UE needs to obtain a required large scale parameter from one or more quasi co-located (QCL) source signals. Therefore, before the UE receives a target reference signal, the base station will configure, for the target reference signal, a QCL source signal thereof and a QCL type between the target reference signal and the source signal by signaling. To configure a QCL relationship between the reference signals, the TCI state is introduced.

The TCI state has a structure of, for example, {RS1|QCL-Type 1, RS2|QCL-Type 2} or {RS1|QCL-Type 1}, where RS1 and RS2 are identification information of downlink reference signals, and QCL-Type 1 and QCL-Type 2 are QCL types. Each TCI state may include, for example, 1 or 2 downlink reference signals and QCL type(s) corresponding thereto. The downlink reference signal configured in the TCI state may be, for example, an SSB or a CSI-RS. If a TCI state is configured for one reference signal, a QCL source signal thereof and a QCL type both may be determined from the configuration of the TCI state.

The TCI state has an exemplary configuration as follows.

The TCI state is configured depending on a type of the reference signal as follows.

Configured by RRC signaling: for example, a TCI state of a periodic CSI-RS/tracking reference signal (TRS) is configured by RRC signaling.

Configured by RRC signaling and activated by a MAC-CE (indicated by a MAC-CE for short): for example, a semi-persistent CSI-RS/TRS or a demodulation reference signal (DM-RS) of a physical downlink control channel (PDCCH) is configured by RRC signaling and then indicated by a MAC-CE.

Configured by RRC signaling, activated by a MAC-CE, and then indicated by DCI (indicated by DCI for short): for example, a aperiodic CSI-RS/TRS or a DM-RS of a physical downlink shared channel (PDSCH) is configured by RRC signaling, activated by a MAC-CE, and indicated by DCI.

Next, an exemplary signaling process of AI beam management according to the present disclosure is specifically described with reference to Fig. 5. It should be understood that the signaling process shown in Fig. 5 is a signaling process of beam management with respect to a downlink transmit/receive beam, and a signaling process of beam management with respect to an uplink transmit/receive beam may also be implemented similarly, which will not be repeated here.

As shown in Fig. 5, T1 and T2 show a period of configuring a TCI state by RRC signaling, wherein, the TCI state may indicate, for example, a plurality of transmit beam sets, each transmit beam set includes a plurality of transmit beams available. For example, a plurality of transmit beam sets B1, B2, B3 may be represented as B1=1~8, B2=9~16, B3=17~24, where the numbers in each beam set indicate IDs of the available transmit beams. In each period T (e.g., T1, T2), a plurality of update periods of a TCI state SSB ID are included; it is exemplified in Fig. 5 that the period T1 includes two update periods t1 and t2, and the period T2 includes two update periods t3 and t4. The SSB ID is used for indicating a TCI state that is activated, e.g., by a MAC CE, and the activated TCI state includes one transmit beam set activated from the plurality of transmit beam sets, indicating IDs (e.g., B1, B2, or B3) of one currently available set of transmit beams. In addition, in each update period t (e.g., t1, t2, t3, t4), a plurality of DCI signaling periods are included, for sending, by the base station, the DCI signaling to the UE.

In a time slot t1, in S11, the base station controls transmit/receive (TX/RX) beam selection using DCI, according to a beam measurement result reported by the UE. This process may be completed, for example, by the beam scanning process shown in Fig. 1. For example, the UE may measure a downlink beam (e.g., measure a SSB or CSI-RS) and report a measurement report, which may include, for example, several beams best in downlink transmit beams and an optimal receive beam corresponding to each downlink transmit beam. For example, the measurement report may include the top four beams with the largest RSRPs and arranged in descending order, or may include an RSRP of a beam strongest in the downlink transmit beams and differences between RSRPs of the remaining several best beams and the strongest beam. The base station indicates, to the UE, a TX beam using the DCI according to the beam measurement result reported by the UE, and the UE determines an RX beam according to the TX beam indicated by the base station.

In S12, the AI beam management model predicts an optimal TX/RX beam for the time slot t2 according to the TX/RX beam pair selection obtained in the S11, and reports by the UE to the base station.

The AI beam management model described in this disclosure may be deployed on a cloud, base station or UE side. In some embodiments, in the case where the AI beam management model is deployed on the cloud side, the AI beam management model acquires the beam measurement result for the time slot t1 from the base station or UE, predicts an optimal beam or optimal beam set for the time slot t2, and provides it to the base station and the UE. In some embodiments, in the case where the AI beam management model is deployed on the base station side, the AI beam management model predicts an optimal beam or optimal beam set for the time slot t2 according to the beam measurement result for the time slot t1 reported by the UE, and provides it to the UE. In some embodiments, in the case where the AI beam management model is deployed on the UE side, the AI beam management model predicts an optimal beam or optimal best beam set for the time slot t2 according to the beam measurement result of the time slot t1 measured by the UE, and provides it to the base station. The case exemplified in the S12 is a case where the AI beam management model is deployed on the UE side.

The optimal TX/RX beam for the time slot t2 that is predicted by the AI beam management model at the time slot t1 can be used at the time slot t2, and thus there is no need of beam measurement at the time slot t2, thereby reducing the sending of the reference signal by the base station and the measurement by the UE and reducing power consumption.

The predicted optimal TX/RX beam described in this disclosure may not only be an optimal TX/RX beam pair, but may also be a set of possible optimal TX beams, a set of possible optimal RX beams, or a set of possible optimal TX/RX beam pairs. Even if what is predicted is not the optimal TX/RX beam pair, but the set of possible optimal TX beams, the set of possible optimal RX beams, or the set of possible optimal TX/RX beam pairs, the UE may only measure this set of beams/beam pairs at the time slot t2 instead of measuring all beams, thereby reducing measurement overhead.

In S13, the UE reports a measurement result based on the TX/RX beam pair selected in the S11 and labels the non-AI mode. Since the selection of the TX/RX beam pair in the S11 is obtained by channel measurement in the non-AI mode, the non-AI mode is labeled for the measurement result. The measurement result reported in this step corresponds to the first channel quality measurement information described above, and may be taken as the past first channel quality measurement information for training the first prediction model 4020 based on the non-AI mode, or as the current first channel quality measurement information for inputting to the first prediction model 4020, to obtain the first channel quality prediction information at the future time.

Next, in the time slot t2, in S21, the base station controls TX/RX beam pair selection using DCI, according to the measurement result of the optimal TX/RX beam (e.g., the optimal TX/RX beam pair) for the time slot t2 predicted in the S12, reported by the UE. In addition, in the case where in the S12, what is reported by the UE to the base station is not an optimal TX/RX beam pair, but an optimal TX beam set, an optimal RX beam set or TX/RX beam pair set, the UE performs beam measurement in the optimal TX beam set, the optimal RX beam set or TX/RX beam pair set, and reports the measurement result to the base station for controlling, by the base station, beam selection.

In S22, the UE reports a measurement result based on the TX/RX beam pair selected in the S21, and labels the AI mode. Since the selection of the TX/RX beam pair in the S21 is predicted by the AI beam management model in the AI mode, the AI mode is labeled for this measurement result. The measurement result reported in this step corresponds to the second channel quality measurement information described above, and may be taken as the past second channel quality measurement information for training the second prediction model 4050 based on the non-AI mode, or as the current second channel quality measurement information for inputting to the second prediction model 4050, to obtain the second channel quality prediction information at the future time.

By means of the signaling process of the AI beam management for the time slots t1 and t2, it is possible to predict, using the AI beam management model, the optimal beam pair, the optimal downlink beam set, the optimal uplink beam set, or the optimal beam pair set for the future time slot, thereby reducing or avoiding the beam measurement, reducing the sending of the reference signal by the base station and the measurement by the UE, and thereby reducing power consumption.

In communication in a higher frequency band (e.g., 52.6-71GHz band), to compensate for greater path loss, a narrower beam would be used, and thus the number of beams would be much greater than the number of beams in a lower frequency band (e.g., 5/6GHz band). However, a maximum number of TCI states supported by a bandwidth part (BWP) is fixed and limited (e.g., 128), and QCL source reference signal SSB IDs in each TCI state are in a fixed one-to-one correspondence with actual SSB IDs, e.g., 128 TCI states can only support indications of 64 beams at most, and thus the maximum TCI state number of 128 may not be able to match the greatly increased number of beams in the higher frequency band (e.g., 52.6-71GHz band).

If no additional beam indications are added, it can be considered that beams included in an activated TCI state are updated, which come from a subset of all beams, for example, the beam set B1, B2, or B3 described above. However, it can be found according to the signaling-time slot relationship of Fig. 5 that, a period that the TCI state is updated is the update period t (t1, t2, t3, t4) of the SSB ID shown in Fig. 5, and requires a longer process, which may result in system delay.

In view of the above problems, in the present disclosure, a solution for coping with an increase in the number of beams without adding additional beam indications has been studied, in which a future beam set in a TCI state is predicted using an AI beam management model to update beams in the TCI state in advance. Next, this solution is specifically described with reference to time slots t3 and t4 in Fig. 5.

In the time slot t3, processes of S31, S32, and S34 correspond to those of the S11, S12, and S13 in the time slot t1, respectively, and will not be repeated here.

In some embodiments, in the case where the activated TCI state does not comprise the beam predicted in the AI mode, processing is performed to modify the activated TCI state to comprise the predicted beam. Specifically, in S33, the UE found that the optimal TX/RX beam (e.g., TX beam) for the time t4 predicted in the S32 is not comprised in the activated TCI state, and notifies the base station to modify the activated TCI state for the time t4, to comprise the predicted optimal TX/RX beam (e.g., TX beam). In addition, in the S33, the case where the AI beam management model is deployed on the UE side is described. In some embodiments, in the case where the AI beam management model is deployed on the base station side, the active TCI state for the time t4 is modified directly by the base station. In other embodiments, in the case where the AI beam management model is deployed on the cloud side, the base station is notified from the cloud side to modify the activated TCI state for the time t4, or the UE is notified from the cloud side and notifies the base station to modify the activated TCI state for the time t4.

In the time slot t4, in S41, the base station controls TX/RX beam pair selection using DCI, according to the measurement result of the optimal TX/RX beam for the time t4 predicted in the S32, reported by the UE. At this time, since the base station has modified the activated TCI state for the time t4 to comprise the measurement result of the optimal TX/RX beam for the time t4, predicted in S32, there is no need to wait for a time for reconfiguring the activated TCI state.

The process of S42 is the same as that of the S22 in the time slot t2, and will not be repeated.

By means of the signaling processes of the AI beam management for the time slots t3 and t4, the solution for coping with an increase in the number of beams without adding additional beam indications can be implemented, in which a future beam set in a TCI state is predicted by using an AI beam management model to update beams in the TCI state in advance.

Next, transmission timings and contents of the first channel quality information 4010 and the second channel quality information 4040 are discussed.

Since the first channel quality information 4010 and the second channel quality information 4040 indicate channel quality information based on the non-AI mode and the AI mode, respectively, a measure needs to be taken to distinguish between them.

In some embodiments, the first channel quality measurement information 4010 and the second channel quality measurement information 4040 may be acquired in different time slots. For example, the base station may configure different reporting time slots for the first channel quality measurement information 4010 and the second channel quality measurement information 4040, so that the UE reports the first channel quality measurement information 4010 and the second channel quality measurement information 4040 in the corresponding time slots. The configuration may be implemented, for example, by MAC CE, DCI or other control signaling. The base station can identify whether the first channel quality measurement information 4010 or the second channel quality measurement information 4040 is reported by the UE according to the different reporting time slots.

In some embodiments, the first channel quality measurement information 4010 and the second channel quality measurement information 4040 may be acquired with different periods. For example, the base station may configure different reporting periods for the first channel quality measurement information 4010 and the second channel quality measurement information 4040, so that the UE reports the first channel quality measurement information 4010 and the second channel quality measurement information 4040 according to the corresponding periods. The configuration may be implemented, for example, by MAC CE, DCI or other control signaling. The base station can identify whether the first channel quality measurement information 4010 or the second channel quality measurement information 4040 is reported by the UE according to the different reporting periods.

In some embodiments, the first channel quality measurement information 4010 and the second channel quality measurement information 4040 may also be acquired with a same period plus different slot offsets. For example, the base station may configure a same reporting period T for the first channel quality measurement information 4010 and the second channel quality measurement information 4040, but configure different reporting slot offsets, for example, the first channel quality measurement information 4010 is reported in a first time slot with the reporting period T, and the second channel quality measurement information 4040 is reported in a second slot with the reporting period T, so that the base station can identify whether the first channel quality measurement information 4010 or the second channel quality measurement information 4040 is reported by the UE according to the reporting period and the different slot offsets. This configuration may be implemented, for example, by MAC CE, DCI or other control signaling.

In some embodiments, the reporting period of the first/second channel quality measurement information described above may also be used for defining a prediction time window of the first/second prediction model of the present disclosure. For example, when the reporting period is T and the current time is t, the prediction model may predict channel quality prediction information at a future time t+T, and then may determine whether the non-AI mode or the AI mode is used at the future time t+T.

In some embodiments, the first channel quality measurement information 4010 may carry identification information for indicating the non-AI mode, and the second channel quality measurement information 4040 may carry identification information for indicating the AI mode, for identification by the base station. In this case, it is not required to distinguish reporting timings of the first channel quality measurement information 4010 and the second channel quality measurement information 4040. In addition, in the case where the base station configures different reporting periods for the first channel quality measurement information 4010 and the second channel quality measurement information 4040, it is possible to carry the identification information to distinguish the AI mode and the non-AI mode, only when the two reporting periods have an integer multiple relationship on the time slots and the reporting time slots for the first channel quality measurement information 4010 and the second channel quality measurement information 4040 overlap.

In some embodiments, different UEs may obtain the second channel quality measurement information based on the AI mode using different AI beam management models. The different AI beam management models may have different model parameters depending on areas where the UEs are located, performance of the UEs, and the like. Therefore, the second channel quality measurement information 4040 may carry model information of the AI beam management model. In this case, in some embodiments, the second prediction model 4050 may include a plurality of second prediction models corresponding to the different AI beam management models, each second prediction model being used for training for second channel quality measurement information of one kind of AI beam management model. In addition, in the prediction stage, it is also possible to select a corresponding second prediction model from the plurality of second prediction models according to the model information of the AI beam management model carried by the second channel quality measurement information, to obtain corresponding second channel quality prediction information.

In some embodiments, the first channel quality measurement information 4010 and the second channel quality measurement information 4040 may also carry auxiliary information, for example, a location, a movement speed, and the like of the UE. The channel quality measurement information obtained by the UE may be different depending on the location and movement speed of the UE. By carrying the location, movement speed, and the like of the UE as the auxiliary information in the channel quality measurement information, it is possible to classify the channel quality measurement information according to the location, movement speed, and the like of the UE. Accordingly, the first prediction model 4020 may include one or more prediction models corresponding to the location and/or movement speed of the UE, which are trained by first channel quality measurement information of the UE at different locations and movement speeds, respectively; and the second prediction model 4050 may include one or more prediction models corresponding to the location and/or movement speed of the UE, which are trained by second channel quality measurement information of the UE at different locations and movement speeds, respectively. Therefore, this enables the trained first prediction model 4020 and second prediction model 4050 to be more accurate. In addition, in the prediction stage, selecting the first prediction model 4020 and the second prediction model 4050 according to the locations and movement speeds carried by the first channel quality measurement information 4010 and the second channel quality measurement information 4040 enables the prediction result to be more accurate. It should be understood that the auxiliary information is not limited to the location and movement speed of the UE, and other auxiliary information can be selected according to actual requirements as long as it can improve the prediction accuracy of the first prediction model 4020 and the second prediction model 4050.

As described above, the electronic device 2000 for predicting a beam management mode described herein may be deployed on a cloud side, base station side, or UE side. In the case where the electronic device 2000 is deployed on the cloud side, the electronic device 2000 acquires corresponding information from the base station side or UE side to train the first prediction model 4020 and the second prediction model 4050, and performs prediction by using the first prediction model 4020 and the second prediction model 4050, to obtain a comparison result 4080 and provide the comparison result 4080 to the base station side/UE side. In the case where the electronic device 2000 is deployed on the base station side, the electronic device 2000 acquires corresponding information from the UE side to train the first prediction model 4020 and the second prediction model 4050, and performs prediction by using the first prediction model 4020 and the second prediction model 4050, to obtain a comparison result 4080 and provide the comparison result 4080 to the UE side. In the case where the electronic device 2000 is deployed on the UE side, the electronic device 2000 acquires corresponding information from the base station side to train the first prediction model 4020 and the second prediction model 4050, and performs prediction by using the first prediction model 4020 and the second prediction model 4050, to obtain a comparison result 4080 and provide the comparison result 4080 to the base station side. In addition, the electronic device 2000 may also in distributed deployment, with a part at the cloud/base station side and a part at the UE side. In addition, since the training of the first prediction model 4020 and the second prediction model 4050 usually requires a large amount of training data and requires great computing and processing capabilities, it is preferable to train the first prediction model 4020 and the second prediction model 4050 at the cloud side or base station side and send the trained first prediction model 4020 and second prediction model 4050 to the UE side for prediction.

Application examples according to the present disclosure will be described below.

The techniques of this disclosure can be applied to a variety of products.

For example, the base station may be implemented as any type of evolved node B (eNB) or a gNodeB (gNB) in next-generation radio access technology, such as a macro eNB/gNB and a small eNB/gNB. The small eNB/gNB may be an eNB/gNB covering a cell smaller than a macro cell, such as a pico eNB/gNB, a micro eNB/gNB, and a home (femto) eNB/gNB. Alternatively, the base station may be implemented as any other type of base station, such as one or both of a base transceiver station (BTS) and a base station controller (BSC) in a GSM system, may be one or both of a radio network controller (RNC) and a NodeB in a WCDMA system, or may be a corresponding network node in a future communication system. The base station may include: a body (also referred to as a base station device) configured to control wireless communication; and one or more remote radio heads (RRHs) arranged at a different location from the body. In addition, various types of terminals, which will be described below, can each operate as the base station by temporarily or semi-persistently performing a base station function.

For example, the user equipment (UE) may be implemented as a mobile terminal (such as a smartphone, a tablet personal computer (PC), a notebook PC, a portable game terminal, a portable/ dongle-type mobile router, and a digital camera device), or a car-mounted terminal (such as a car navigation device). The user equipment may also be implemented as a terminal (also referred to as a machine type communication (MTC) terminal) that performs machine-to-machine (M2M) communication. Furthermore, the user equipment may be a wireless communication module (such as an integrated circuit module including a single chip) mounted on each of the above terminals.

### [Application example with respect to base station]

### (First application example)

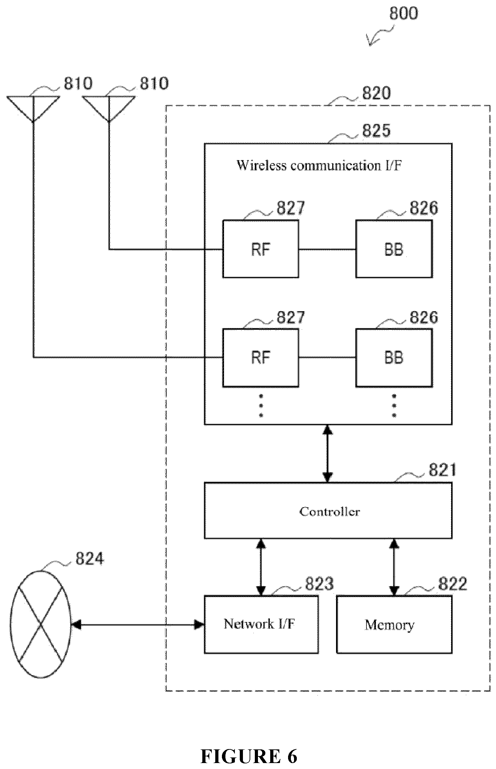

Fig. 6 is a block diagram illustrating a first example of a schematic configuration of a gNB to which the technique of this disclosure can be applied. The gNB 800 includes one or more antennas 810 and a base station device 820. The base station device 820 and each antenna 810 may be connected to each other via an RF cable.

Each of the antennas 810 includes a single or plurality of antenna elements (such as a plurality of antenna elements included in a multiple-input multiple-output (MIMO) antenna), and is used for transmitting and receiving radio signals by the base station device 820. As shown in Fig. 6, the gNB 800 may include the plurality of antennas 810. For example, the plurality of antennas 810 may be compatible with a plurality of frequency bands used by the gNB 800. The base station device 820 includes a controller 821, a memory 822, a network interface 823 and a wireless communication interface 825.

The controller 821 may be, for example, a CPU or a DSP, and operates various functions of higher layers of the base station device 820. For example, the controller 821 generates a data packet according to data in a signal processed by the wireless communication interface 825 and transmits the generated packet via the network interface 823. The controller 821 may bundle data from a plurality of baseband processors to generate a bundle packet and transmit the generated bundle packet. The controller 821 may have a logic function of performing the following control: such as radio resource control, radio bearer control, mobile management, admission control and scheduling. This control may be performed in conjunction with a nearby gNB, eNB or core network node (such as an access and mobility management function (AMF)). The memory 822 includes a RAM and a ROM, and stores a program executed by the controller 821 and various types of control data (such as a terminal list, transmission power data, and scheduling data).

The network interface 823 is a communication interface for connecting the base station device 820 to a core network 824. The controller 821 may communicate with a core network node or another gNB/eNB via the network interface 823. In this case, the gNB 800 and the core network node or other gNB/eNB may be connected to each other through a logical interface (such as an N2 interface and the AMF, and an Xn interface and the gNB). The network interface 823 may also be a wired communication interface or a wireless communication interface for a radio backhaul. If the network interface 823 is a wireless communication interface, the network interface 823 may use a higher frequency band for wireless communication, compared to a frequency band used by the wireless communication interface 825.

The wireless communication interface 825 supports any cellular communication solution (such as LTE, LTE-advanced, NR (new radio)), and provides a radio connection to a terminal located in a cell of the gNB 800 via the antenna 810. The wireless communication interface 825 may generally include, for example, a baseband (BB) processor 826 and an RF circuit 827. The BB processor 826 may perform, for example, encoding/decoding, modulation/demodulation, and multiplexing/demultiplexing, and perform various types of signal processing for layers (such as L1, medium access control (MAC), radio link control (RLC), and packet data convergence protocol (PDCP)). Instead of the controller 821, the BB processor 826 may have some or all of the above logic functions. The BB processor 826 may be a memory for storing a communication control program, or a module including a processor configured to execute a program and related circuits. Updating the program may make the function of the BB processor 826 change. The module may be a card or blade inserted into a slot of the base station device 820. Alternatively, the module may be a chip mounted on a card or blade. Meanwhile, the RF circuit 827 may include, for example, a mixer, a filter, and an amplifier, and transmits and receives a radio signal via the antenna 810.

As shown in Fig. 6, the wireless communication interface 825 may include a plurality of BB processors 826. For example, the plurality of BB processors 826 may be compatible with the plurality of frequency bands used by the gNB 800. As shown in Fig. 6, the wireless communication interface 825 may include a plurality of RF circuits 827. For example, the plurality of RF circuits 827 may be compatible with the plurality of antenna elements. Although Fig. 6 shows the example where the wireless communication interface 825 includes the plurality of BB processors 826 and the plurality of RF circuits 827, the wireless communication interface 825 may also include a single BB processor 826 or a single RF circuit 827.

### (Second application example)

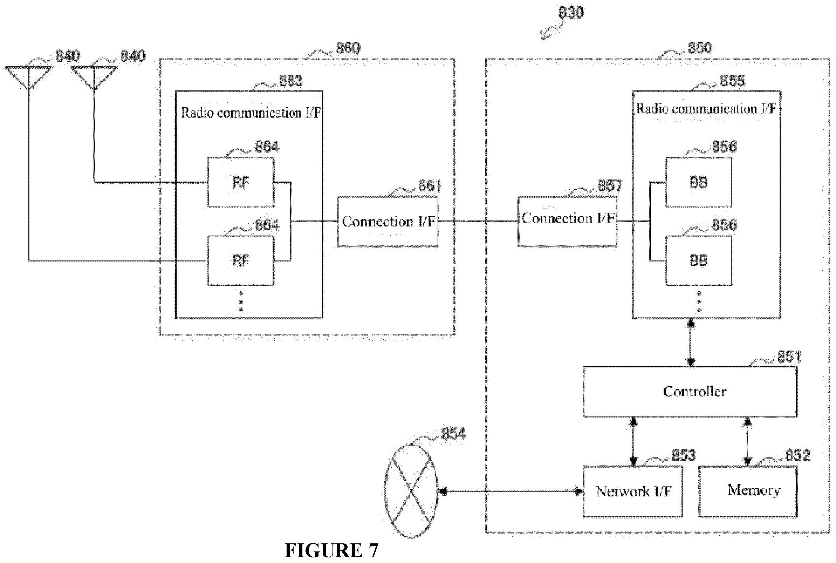

Fig. 7 is a block diagram illustrating a second example of a schematic configuration of a gNB to which the technique of this disclosure can be applied. The gNB 830 includes one or more antennas 840, a base station device 850, and an RRH 860. The RRH 860 and each antenna 840 may be connected to each other via an RF cable. The base station device 850 and RRH 860 may be connected to each other via a high-speed line such as an optical fiber cable.

Each of the antennas 840 includes a single or plurality of antenna elements (such as a plurality of antenna elements included in a MIMO antenna) and is used for transmitting and receiving radio signals by the RRH 860. As shown in Fig. 7, the gNB 830 may include the plurality of antennas 840. For example, the plurality of antennas 840 may be compatible with a plurality of frequency bands used by the gNB 830. The base station device 850 includes a controller 851, a memory 852, a network interface 853, a wireless communication interface 855, and a connection interface 857. The controller 851, the memory 852 and the network interface 853 are the same as the controller 821, the memory 822 and the network interface 823 described with reference to Fig. 6.

The wireless communication interface 855 supports any cellular communication solution (such as LTE and LTE-advanced) and provides wireless communication to a terminal located in a sector corresponding to the RRH 860 via the RRH 860 and antenna 840. The wireless communication interface 855 may generally include, for example, a BB processor 856. The BB processor 856 is the same as the BB processor 826 described with reference to Fig. 6, other than the BB processor 856 being connected to an RF circuit 864 of the RRH 860 via the connection interface 857. As shown in Fig. 7, the wireless communication interface 855 may include a plurality of BB processors 856. For example, the plurality of BB processors 856 can be compatible with the plurality of frequency bands used by the gNB 830. Although Fig. 7 shows the example where the wireless communication interface 855 includes the plurality of BB processors 856, the wireless communication interface 855 may also include a single BB processor 856.

The connection interface 857 is an interface for connecting the base station device 850 (wireless communication interface 855) to the RRH 860. The connection interface 857 may also be a communication module for communication in the above high-speed line connecting the base station device 850 (wireless communication interface 855) to the RRH 860.

The RRH 860 includes a connection interface 861 and a wireless communication interface 863.

The connection interface 861 is an interface for connecting the RRH 860 (wireless communication interface 863) to the base station device 850. The connection interface 861 may also be a communication module for communication in the above high-speed line.

The wireless communication interface 863 transmits and receives radio signals via the antenna 840. The wireless communication interface 863 may generally include, for example, the RF circuit 864. The RF circuit 864 may include, for example, a mixer, a filter, and an amplifier, and transmits and receives radio signals via the antenna 840. As shown in Fig. 7, the wireless communication interface 863 may include a plurality of RF circuits 864. For example, the plurality of RF circuits 864 may support the plurality of antenna elements. Although Fig. 7 shows the example where the wireless communication interface 863 includes the plurality of RF circuits 864, the wireless communication interface 863 may also include a single RF circuit 864.

In the gNB 800 and gNB 830 shown in Figs. 6 and 7, one or more components included in the processing circuit 2010 described with reference to Fig. 2 may be implemented in a wireless communication interface 912. Alternatively, at least a portion of these components may also be implemented by the controllers 821 and 851.

### [Application example with respect to user equipment]

### (First application example)

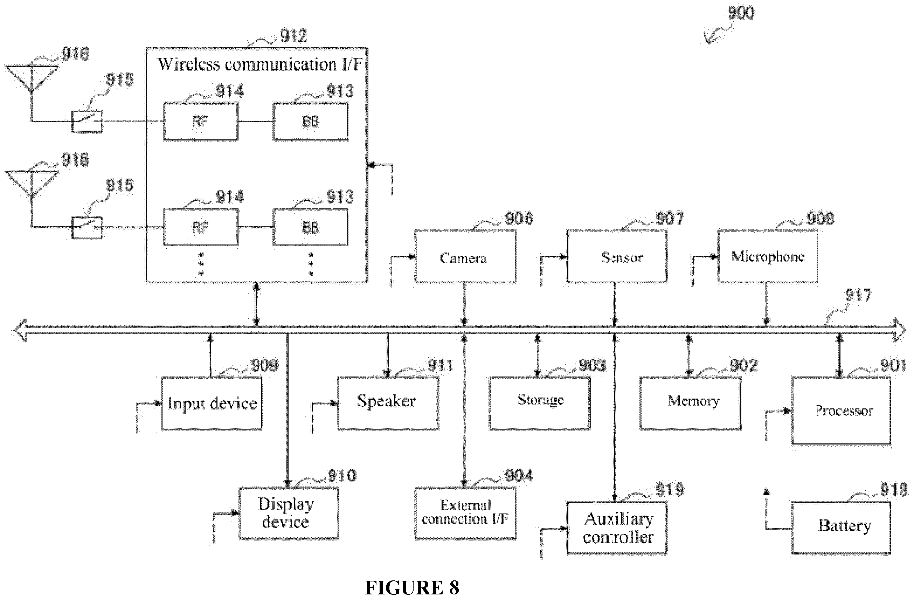

Fig. 8 is a block diagram illustrating an example of a schematic configuration of a smartphone 900 to which the technique of this disclosure can be applied. The smartphone 900 includes a processor 901, a memory 902, a storage device 903, an external connection interface 904, a camera device 906, a sensor 907, a microphone 908, an input device 909, a display device 910, a speaker 911, a wireless communication interface 912, one or more antenna switches 915, one or more antennas 916, a bus 917, a battery 918, and a secondary controller 919.

The processor 901 may be, for example, a CPU or a system on chip (SoC), and controls functions of an application layer and other layers of the smartphone 900. The memory 902 includes a RAM and a ROM, and stores data and a program executed by the processor 901. The storage device 903 may include a storage medium such as a semiconductor memory and a hard disk. The external connection interface 904 is an interface for connecting an external device (such as a memory card and a universal serial bus (USB) device) to the smartphone 900.

The camera device 906 includes an image sensor (such as a charge coupled device (CCD) and a complementary metal oxide semiconductor (CMOS)), and generates a capture image. The sensor 907 may include a set of sensors such as a measurement sensor, a gyro sensor, a geomagnetic sensor, and an acceleration sensor. The microphone 908 converts sound inputted to the smartphone 900 into an audio signal. The input device 909 includes, for example, a touch sensor configured to detect a touch on a screen of the display device 910, a keypad, a keyboard, a button, or a switch, and receives an operation or information input from a user. The display device 910 includes a screen (such as a liquid crystal display (LCD) and an organic light emitting diode (OLED) display), and displays an output image of the smartphone 900. The speaker 911 converts an audio signal output from the smartphone 900 into sound.

The wireless communication interface 912 supports any cellular communication solution (such as LTE and LTE-advanced) and performs wireless communication. The wireless communication interface 912 may generally include, for example, a BB processor 913 and an RF circuit 914. The BB processor 913 can perform, for example, encoding/decoding, modulation/demodulation, and multiplexing/demultiplexing, and perform various types of signal processing for wireless communication. Meanwhile, the RF circuit 914 may include, for example, a mixer, a filter, and an amplifier, and transmits and receives radio signals via the antenna 916. The wireless communication interface 912 may be one chip module having the BB processor 913 and the RF circuit 914 integrated thereon. As shown in Fig. 8, the wireless communication interface 912 may include a plurality of BB processors 913 and a plurality of RF circuits 914. Although Fig. 8 shows the example where the wireless communication interface 912 includes the plurality of BB processors 913 and the plurality of RF circuits 914, the wireless communication interface 912 may also include a single BB processor 913 or a single RF circuit 914.

Furthermore, the wireless communication interface 912 may support another type of wireless communication solution, such as a short-range wireless communication solution, a near field communication solution, and a wireless local area network (LAN) solution, in addition to the cellular communication solution. In this case, the wireless communication interface 912 may include the BB processor 913 and the RF circuit 914 for each wireless communication solution.

Each of the antenna switches 915 switches a connection destination of the antenna 916 between a plurality of circuits (for example, circuits for different wireless communication solutions) included in the wireless communication interface 912.

Each of the antennas 916 includes a single or plurality of antenna elements (such as a plurality of antenna elements included in a MIMO antenna) and is used for transmitting and receiving radio signals by the wireless communication interface 912. As shown in Fig. 8, the smartphone 900 may include a plurality of antennas 916. Although Fig. 8 shows the example where the smartphone 900 includes the plurality of antennas 916, the smartphone 900 may also include a single antenna 916.

Furthermore, the smartphone 900 may include the antenna 916 for each wireless communication solution. In this case, the antenna switch 915 may be omitted from the configuration of the smartphone 900.

The bus 917 connects the processor 901, the memory 902, the storage device 903, the external connection interface 904, the camera device 906, the sensor 907, the microphone 908, the input device 909, the display device 910, the speaker 911, the wireless communication interface 912, and the secondary controller 919 to each other. The battery 918 provides power to the various blocks of the smartphone 900 shown in Fig. 8 via a feeder, which is partially shown as a dashed line in the figure. The secondary controller 919 operates minimum necessary functions of the smartphone 900, for example, in a sleep mode.

In the smartphone 900 shown in Fig. 8, one or more components included in the processing circuit 2010 described with reference to Fig. 2 may be implemented in the wireless communication interface 912. Alternatively, at least a portion of these components may also be implemented by the processor 901 or the secondary controller 919.

### (Second application example)

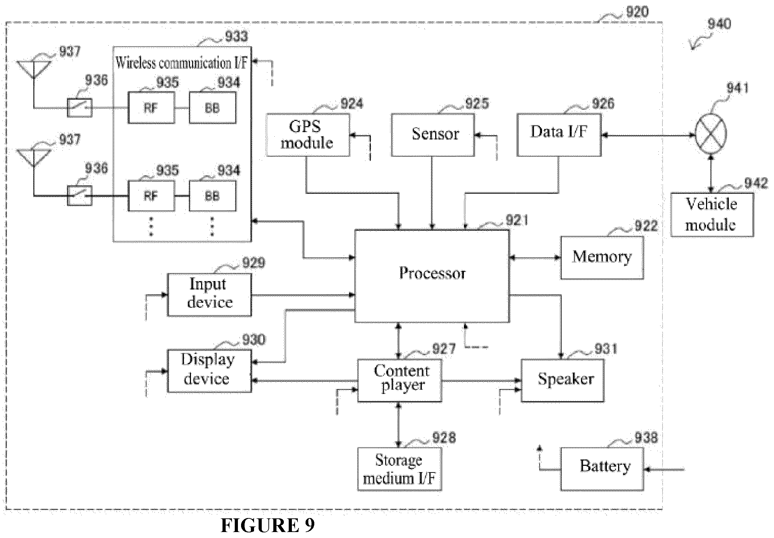

Fig. 9 is a block diagram illustrating an example of a schematic configuration of a car navigation device 920 to which the technique of this disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or SoC, and controls a navigation function and other functions of the car navigation device 920. The memory 922 includes a RAM and a ROM, and stores data and a program executed by the processor 921.

The GPS module 924 measures a location (such as latitude, longitude, and altitude) of the car navigation device 920 using a GPS signal received from a GPS satellite. The sensor 925 may include a set of sensors such as gyro sensors, geomagnetic sensors, and air pressure sensors. The data interface 926 is, via a terminal not shown, connected to, for example, a car-mounted network 941, and acquires data generated by a vehicle (such as vehicle velocity data) .

The content player 927 reproduces content stored in a storage medium (such as a CD and a DVD) inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or OLED display, and displays an image of a navigation function or reproduced content. The speaker 931 outputs sound of the navigation function or reproduced content.

The wireless communication interface 933 supports any cellular communication solution (such as LTE and LTE-advanced) and performs wireless communication. The wireless communication interface 933 may generally include, for example, a BB processor 934 and an RF circuit 935. The BB processor 934 may perform, for example, encoding/decoding, modulation/demodulation, and multiplexing/demultiplexing, and perform various types of signal processing for wireless communication. Meanwhile, the RF circuit 935 may include, for example, a mixer, a filter, and an amplifier, and transmit and receive radio signals via the antenna 937. The wireless communication interface 933 may also be one chip module having the BB processor 934 and the RF circuit 935 integrated thereon. As shown in Fig. 9, the wireless communication interface 933 may include a plurality of BB processors 934 and a plurality of RF circuits 935. Although Fig. 9 shows the example where the wireless communication interface 933 includes the plurality of BB processors 934 and the plurality of RF circuits 935, the wireless communication interface 933 may also include a single BB processor 934 or a single RF circuit 935.

Furthermore, the wireless communication interface 933 may support another type of wireless communication solution, such as a short-range wireless communication solution, a near field communication solution, and a wireless LAN solution, in addition to the cellular communication solution. In this case, for each wireless communication solution, the wireless communication interface 933 can include the BB processor 934 and the RF circuit 935.

Each of the antenna switches 936 switches a connection destination of the antenna 937 between a plurality of circuits (such as circuits for different wireless communication solutions) included in the wireless communication interface 933.

Each of the antennas 937 includes a single or plurality of antenna elements (such as a plurality of antenna elements included in a MIMO antenna), and is used for transmitting and receiving radio signals by the wireless communication interface 933. As shown in Fig. 9, the car navigation device 920 may include a plurality of antennas 937. Although Fig. 9 shows the example where the car navigation device 920 includes the plurality of antennas 937, the car navigation device 920 may also include a single antenna 937.

Furthermore, the car navigation device 920 may include the antenna 937 for each wireless communication solution. In this case, the antenna switch 936 may be omitted from the configuration of the car navigation device 920.

The battery 938 provides power to the various blocks of the car navigation device 920 shown in Fig. 9 via a feeder, which is partially shown as a dashed line in the figure. The battery 938 accumulates power supplied from the vehicle.

In the car navigation device 920 shown in Fig. 9, one or more components included in the processing circuit 2010 described with reference to Fig. 2 may be implemented in the wireless communication interface 912. Alternatively, at least a portion of these components may also be implemented by the processor 921.

The technique of this disclosure may also be implemented as a car-mounted system (or vehicle) 940 including the car navigation device 920, the car-mounted network 941, and one or more blocks in a vehicle module 942. The vehicle module 942 generates vehicle data (such as vehicle velocity, engine velocity, and fault information), and outputs the generated data to the car-mounted network 941.

It should be appreciated that reference to "an embodiment" or similar expressions in this description refers to a specific feature, structure, or characteristic described in conjunction with the embodiment being included in at least one specific embodiment of the present disclosure. Thus, in this description, appearances of the phrase "in an embodiment of the present disclosure" and similar expressions do not necessarily refer to the same embodiment.

Those skilled in the art should appreciate that the present disclosure may be implemented as a system, apparatus, method, or computer-readable storage medium (e.g., non-transient storage medium) as a computer program product. Accordingly, the present disclosure may be implemented in various forms, such as an entire hardware embodiment, an entire software embodiment (including firmware, resident software, micro-program code, etc.), or in a form of software and hardware implementations, which may be hereinafter referred to as a "circuit", "module" or "system". Furthermore, the present disclosure may also be, in any tangible media form, implemented as a computer program product having computer-usable program code stored thereon.

The related statement of the present disclosure is described with reference to the flow diagrams and/or block diagrams of the system, apparatus, method and computer program product according to the specific embodiments of the present disclosure. It can be understood that each block in each flow diagram and/or block diagram, and any combination of blocks in the flow diagrams and/or block diagrams, can be implemented using computer program instructions. These computer program instructions may be executed by a machine formed by a processor of a universal computer or special computer or another programmable data processing apparatus, and the instructions are processed via the computer or other programmable data processing apparatus, so as to implement the functions or operations specified in the flow diagrams and/or block diagrams.

In the accompanying drawings, the flow diagrams and block diagrams of the architecture, functions, and operations that can be implemented by the system, apparatus, method and computer program product according to various embodiments of the present disclosure are shown. Therefore, each block in the flow diagram or block diagram may represent a module, segment, or part of program code, which includes one or more executable instructions to implement the specified logical function. In addition, it should be noted that, in some other embodiments, the functions described in the blocks may not be performed in the order shown in the figure. For example, two successively illustrated blocks may, in fact, be executed concurrently, or according to functions involved, they may, in some cases, be executed in an order opposite to that noted in the figure. Furthermore, it should also be noted that blocks of each block diagram and/or flow diagram, and a combination of blocks in the block diagram and/or flow diagram, can be implemented by a dedicated hardware-based system, or specified functions or operations are performed by a combination of dedicated hardware and computer instructions.

The embodiments of the present disclosure have been described above, wherein the above description is exemplary rather than exhaustive, and not limited to the embodiments disclosed. Many modifications and variations are apparent to those of ordinary skill in the art without departing from the scope and spirit of the described embodiments. The selection of the terms used herein is intended to best explain the principles of the embodiments, practical applications, or technical improvements to market technology, or to enable others of ordinary skill in the art to understand the embodiments disclosed herein.

Note that the techniques disclosed in this description may have the following configurations.
(1) An electronic device, comprising:
   a processing circuit configured to:
   acquire first channel quality measurement information based on a non-artificial intelligence (AI) mode and second channel quality measurement information based on an AI mode, wherein, in the non-AI mode, beam measurement is performed to determine a beam for information transmission, the first channel quality measurement information comprising channel quality measurement information for the determined beam; and in the AI mode, a beam for information transmission is predicted using an AI beam management model, the second channel quality measurement information comprising channel quality measurement information for the predicted beam;
   provide, to a first prediction model, the first channel quality measurement information as an input, and obtain, from an output of the first prediction model, first channel quality prediction information predicted for a future time, the first prediction model being trained using past first channel quality measurement information in the non-AI mode;
   provide, to a second prediction model, the second channel quality measurement information as an input, and obtain, from an output of the second prediction model, second channel quality prediction information predicted for the future time, the second prediction model being trained using past second channel quality measurement information in the AI mode; and
   compare the first channel quality prediction information with the second channel quality prediction information, to determine whether the non-AI mode or the AI mode is used at the future time.
(2) The electronic device according to (1), wherein,
   the first channel quality measurement information and the second channel quality measurement information are obtained in different time slots.
(3) The electronic device according to (1), wherein,
   the first channel quality measurement information and the second channel quality measurement information are acquired with different periods.
(4) The electronic device according to (1), wherein,
   the first channel quality measurement information carries identification information for indicating the non-AI mode, and the second channel quality measurement information carries identification information for indicating the AI mode.
(5) The electronic device according to (1), wherein,
   the second channel quality measurement information carries model information of the AI beam management model.
(6) The electronic device according to (1), wherein,
   the first channel quality measurement information and the second channel quality measurement information are acquired from a user equipment and carry a location and/or movement speed of the user equipment, and
   the first prediction model comprises one or more prediction models corresponding to the location and/or movement speed of the user equipment, and the second prediction model comprises one or more prediction models corresponding to the location and/or movement speed of the user equipment.
(7) The electronic device according to (1), wherein, the processing circuit is further configured to:
   in the case where an activated transmission configuration indicator (TCI) state does not comprise the beam predicted in the AI mode, perform processing to modify the activated TCI state to comprise the predicted beam.
(8) The electronic device according to (1), wherein, the processing circuit is further configured to:
   when a difference between the first channel quality prediction information and the second channel quality prediction information is below a first predetermined threshold, determine that the AI mode is used at the future time, and
   when a difference between the first channel quality prediction information and the second channel quality prediction information is greater than the first predetermined threshold, determine that the non-AI mode is used at the future time.
(9) The electronic device according to (8), wherein, the processing circuit is further configured to:
   when the difference between the first channel quality prediction information and the second channel quality prediction information is greater than a second preset threshold, retrain the second prediction model.
(10) A communication method, comprising:
   acquiring first channel quality measurement information based on a non-artificial intelligence (AI) mode and second channel quality measurement information based on an AI mode, wherein, in the non-AI mode, beam measurement is performed to determine a beam for information transmission, the first channel quality measurement information comprising channel quality measurement information for the determined beam; and in the AI mode, a beam for information transmission is predicted using an AI beam management model, the second channel quality measurement information comprising channel quality measurement information for the predicted beam;
   providing, to a first prediction model, the first channel quality measurement information as an input, and obtaining, from an output of the first prediction model, first channel quality prediction information predicted for a future time, the first prediction model being trained using past first channel quality measurement information in the non-AI mode;
   providing, to a second prediction model, the second channel quality measurement information as an input, and obtaining, from an output of the second prediction model, second channel quality prediction information predicted for the future time, the second prediction model being trained using past second channel quality measurement information in the AI mode; and
   comparing the first channel quality prediction information with the second channel quality prediction information, to determine whether the non-AI mode or the AI mode is used at the future time.
(11) The communication method according to (10), wherein,
   the first channel quality measurement information and the second channel quality measurement information are acquired in different time slots.
(12) The communication method according to (10), wherein,
   the first channel quality measurement information and the second channel quality measurement information are acquired with different periods.
(13) The communication method according to (10), wherein
   the first channel quality measurement information carries identification information for indicating the non-AI mode, and the second channel quality measurement information carries identification information for indicating the AI mode.
(14) The communication method according to (10), wherein,
   the second channel quality measurement information carries model information of the AI beam management model.
(15) The communication method according to (10), wherein,
   the first channel quality measurement information and the second channel quality measurement information are acquired from a user equipment and carry a location and/or movement speed of the user equipment, and
   the first prediction model comprises one or more prediction models corresponding to the location and/or movement speed of the user equipment, and the second prediction model comprises one or more prediction models corresponding to the location and/or movement speed of the user equipment.
(16) The communication method according to (10), further comprising:
   in the case where an activated transmission configuration indicator (TCI) state does not comprise the beam predicted in the AI mode, performing processing to modify the activated TCI state to comprise the predicted beam.
(17) The communication method according to (10), further comprising:
   when a difference between the first channel quality prediction information and the second channel quality prediction information is below a first predetermined threshold, determining that the AI mode is used at the future time, and
   when the difference between the first channel quality prediction information and the second channel quality prediction information is greater than the first predetermined threshold, determining that the non-AI mode is used at the future time.
(18) The communication method according to (10), further comprising:
   when the difference between the first channel quality prediction information and the second channel quality prediction information is greater than a second preset threshold, retraining the second prediction model.
(19) A computer-readable storage medium, comprising executable instructions which, when executed by an information processing device, cause the information processing device to perform the communication method according to any of (10) to (18).
(20) A computer program product, comprising a computer program which, when executed by a processor, causes the processor to perform the communication method according to any of (10) to (18).

## Claims

1. An electronic device, comprising:
a processing circuit configured to:
acquire first channel quality measurement information based on a non-artificial intelligence (AI) mode and second channel quality measurement information based on an AI mode, wherein, in the non-AI mode, beam measurement is performed to determine a beam for information transmission, the first channel quality measurement information comprising channel quality measurement information for the determined beam; and in the AI mode, a beam for information transmission is predicted using an AI beam management model, the second channel quality measurement information comprising channel quality measurement information for the predicted beam;
provide, to a first prediction model, the first channel quality measurement information as an input, and obtain, from an output of the first prediction model, first channel quality prediction information predicted for a future time, the first prediction model being trained using past first channel quality measurement information in the non-AI mode;
provide, to a second prediction model, the second channel quality measurement information as an input, and obtain, from an output of the second prediction model, second channel quality prediction information predicted for the future time, the second prediction model being trained using past second channel quality measurement information in the AI mode; and
compare the first channel quality prediction information with the second channel quality prediction information, to determine whether the non-AI mode or the AI mode is used at the future time.

2. The electronic device according to claim 1, wherein,
the first channel quality measurement information and the second channel quality measurement information are acquired in different time slots.

3. The electronic device according to claim 1, wherein,
the first channel quality measurement information and the second channel quality measurement information are acquired with different periods.

4. The electronic device according to claim 1, wherein,
the first channel quality measurement information carries identification information for indicating the non-AI mode, and the second channel quality measurement information carries identification information for indicating the AI mode.

5. The electronic device according to claim 1, wherein,
the second channel quality measurement information carries model information of the AI beam management model.

6. The electronic device according to claim 1, wherein,
the first channel quality measurement information and the second channel quality measurement information are acquired from a user equipment and carry a location and/or movement speed of the user equipment, and
the first prediction model comprises one or more prediction models corresponding to the location and/or movement speed of the user equipment, and the second prediction model comprises one or more prediction models corresponding to the location and/or movement speed of the user equipment.

7. The electronic device according to claim 1, wherein the processing circuit is further configured to:
in the case where an activated transmission configuration indicator (TCI) state does not comprise the beam predicted in the AI mode, perform processing to modify the activated TCI state to comprise the predicted beam.

8. The electronic device according to claim 1, wherein, the processing circuit is further configured to:
when a difference between the first channel quality prediction information and the second channel quality prediction information is below a first predetermined threshold, determine that the AI mode is used at the future time, and
when the difference between the first channel quality prediction information and the second channel quality prediction information is greater than the first predetermined threshold, determine that the non-AI mode is used at the future time.

9. The electronic device according to claim 8, wherein, the processing circuit is further configured to:
when the difference between the first channel quality prediction information and the second channel quality prediction information is greater than a second preset threshold, retrain the second prediction model.

10. A communication method, comprising:
acquiring first channel quality measurement information based on a non-artificial intelligence (AI) mode and second channel quality measurement information based on an AI mode, wherein, in the non-AI mode, beam measurement is performed to determine a beam for information transmission, the first channel quality measurement information comprising channel quality measurement information for the determined beam; and in the AI mode, a beam for information transmission is predicted using an AI beam management model, the second channel quality measurement information comprising channel quality measurement information for the predicted beam;
providing, to a first prediction model, the first channel quality measurement information as an input, and obtaining, from an output of the first prediction model, first channel quality prediction information predicted for a future time, the first prediction model being trained using past first channel quality measurement information in the non-AI mode;
providing, to a second prediction model, the second channel quality measurement information as an input, and obtaining, from an output of the second prediction model, second channel quality prediction information predicted for the future time, the second prediction model being trained using past second channel quality measurement information in the AI mode; and
comparing the first channel quality prediction information with the second channel quality prediction information, to determine whether the non-AI mode or the AI mode is used at the future time.

11. The communication method according to claim 10, wherein,
the first channel quality measurement information and the second channel quality measurement information are acquired in different time slots.

12. The communication method according to claim 10, wherein,
the first channel quality measurement information and the second channel quality measurement information are acquired with different periods.

13. The communication method according to claim 10, wherein,
the first channel quality measurement information carries identification information for indicating the non-AI mode, and the second channel quality measurement information carries identification information for indicating the AI mode.

14. The communication method according to claim 10, wherein,
the second channel quality measurement information carries model information of the AI beam management model.

15. The communication method according to claim 10, wherein,
the first channel quality measurement information and the second channel quality measurement information are acquired from a user equipment and carry a location and/or movement speed of the user equipment, and
the first prediction model comprises one or more prediction models corresponding to the location and/or movement speed of the user equipment, and the second prediction model comprises one or more prediction models corresponding to the location and/or movement speed of the user equipment.

16. The communication method according to claim 10, further comprising:
in the case where an activated transmission configuration indicator (TCI) state does not comprise the beam predicted in the AI mode, performing processing to modify the activated TCI state to comprise the predicted beam.

17. The communication method according to claim 10, further comprising:
when a difference between the first channel quality prediction information and the second channel quality prediction information is below a first predetermined threshold, determining that the AI mode is used at the future time, and
when the difference between the first channel quality prediction information and the second channel quality prediction information is greater than the first predetermined threshold, determining that the non-AI mode is used at the future time.

18. The communication method according to claim 10, further comprising:
when the difference between the first channel quality prediction information and the second channel quality prediction information is greater than a second preset threshold, retraining the second prediction model.

19. A computer-readable storage medium, comprising executable instructions which, when executed by an information processing device, cause the information processing device to perform the communication method according to any of claims 10 to 18.

20. A computer program product, comprising a computer program which, when executed by a processor, causes the processor to perform the communication method according to any of claims 10 to 18.
